# FASCICULE DE BREVET EUROPEEN

(11) **EP 2 148 118 B1**
(45) Date de publication et mention de la délivrance du brevet: **22.05.2013**
(21) Numéro de dépôt: 09305693.5
(22) Date de dépôt: 22.07.2009
(51) Int. Cl.: F16L 5/00

(54) **Dispositif d'habillage pour l'extremite inferieure d'un conduit d'evacuation de fumee depassant sous un plafond ou un faux plafond**
Kleidung für von aus einer Decke herausstehenden Abgasrauchrohrende
Covering device for flue end section sticking out of a ceiling

(30) Priorité: 23.07.2008 FR 0855016
(43) Date de publication de la demande: 27.01.2010
(73) Titulaire: Poujoulat, 79360 Granzay Gript (FR)
(72) Inventeur: Thomas, Stéphane, 79460 Magne (FR); Pierre, Jean-Luc, 79460 Magne (FR); Druette, Lionel, 79180 Chauray (FR); Coirier, Frédéric, 92380 Garches (FR)
(74) Mandataire: Michelet, Alain

(56) Documents cités:
- DE-U1-202007 017 476
- US-A- 3 874 363
- US-B1- 6 386 972

## Description

La présente invention concerne le domaine général de la fumisterie.
Elle concerne plus particulièrement un dispositif d'habillage pour l'extrémité inférieure d'un conduit d'évacuation de fumée dépassant sous un plafond ou un faux plafond.

Les appareils de chauffage du genre poêle, insert ou cuisinière, génèrent des fumées qu'il est nécessaire de canaliser en vue de leur évacuation à l'extérieur de l'habitation équipée.
De manière classique, lors de la construction de l'habitation, un conduit d'évacuation de fumée peut être posé entre le plafond (ou le faux plafond) de la pièce dans laquelle l'appareil de chauffage est prévu, et une sortie extérieure, généralement une sortie de toit s'étendant en saillie de la toiture. A ce niveau, l'extrémité supérieure du conduit peut être associée à une structure d'habillage adaptée pour réaliser l'étanchéité sur la périphérie de l'orifice de sortie (par exemple comme décrit dans le document DE-20 2007 017476).
L'extrémité inférieure de ce conduit d'évacuation dépasse généralement de quelques centimètres sous le niveau du plafond de la pièce équipée ; cette extrémité inférieure est destinée à être raccordée à l'appareil de chauffage par un conduit de raccordement adapté, apparent.

Dans l'attente de la pose de l'appareil de chauffage et de son conduit de raccordement, l'extrémité inférieure du conduit d'évacuation de fumée dépassant sous le plafond est obturée et/ou masquée.
Habituellement le plaquiste ou le plâtrier confectionne pour cela sur le site, au cas par cas, une sorte de caisson temporaire de finition, en plâtre ou plaque de plâtre, fixé sur le plafond.
Au moment de la pose de l'appareil de chauffage et de son tuyau de raccordement, ce caisson est détruit ou simplement ouvert pour accéder au conduit d'évacuation. Le chantier est finalisé par un raccord de plâtre au plafond et/ou par fixation d'une plaque de propreté.

Cependant, le caisson de finition temporaire n'est pas facile à mettre en oeuvre ; son façonnage nécessite du temps et il n'est pas toujours très esthétique.
En outre, étant fixé sur le plafond ou le faux plafond, son poids peut poser des problèmes de répartition de charges. De plus, la finition lors de la pose du tuyau de raccordement, n'est pas non plus très facile à réaliser et le résultat obtenu peut ne pas être esthétique.

Le but de la présente invention est de remédier à ces inconvénients et de proposer un dispositif d'habillage pour l'extrémité inférieure du conduit d'évacuation de fumée, qui est facile à poser, esthétique et qui n'entraine aucune contrainte de poids sur le plafond ou le faux plafond équipé.

Pour cela, le dispositif d'habillage selon l'invention comprend :
- une pièce d'habillage constituée d'une virole, dont l'une des extrémités se prolonge vers l'extérieur par une collerette qui s'étend dans un plan perpendiculaire à l'axe de ladite virole, et dont l'autre extrémité comporte des moyens de fixation d'un organe d'obturation amovible, et
- des moyens pour solidariser entre eux ladite pièce d'habillage et le conduit d'évacuation de fumée, lesquels moyens sont adaptés pour permettre le support de ladite pièce d'habillage par ledit conduit, ceci de manière suspendue sous ledit conduit, tout en assurant l'appui de ladite collerette contre la face inférieure du plafond ou faux plafond.

Selon une autre caractéristique ce dispositif d'habillage comporte, - soit un organe d'obturation plein, lorsque le conduit d'évacuation de fumées n'est pas associé à un conduit de raccordement, - soit un organe d'obturation muni d'un orifice de passage d'un conduit de raccordement, en cas de présence d'un tel conduit de raccordement relié audit conduit d'évacuation.

De préférence, la pièce d'habillage comprend une virole cylindrique associée à un organe d'obturation dont le pourtour extérieur est circulaire.

Selon une forme de réalisation particulière, la collerette de la pièce d'habillage présente un pourtour extérieur circulaire. Dans une variante de réalisation, ce pourtour extérieur est carré.

Toujours selon une autre particularité, les moyens de solidarisation entre la pièce d'habillage et le conduit de fumée sont constitués d'une pluralité de tiges filetées qui viennent assembler chacune deux pattes, l'une solidaire de la face interne de la virole et l'autre solidaire de la face externe du conduit de fumée.
Les pattes solidaires du conduit de fumée sont avantageusement fixées sur un collier de serrage rapporté.

Selon encore une autre caractéristique, la face de la collerette qui est orientée à l'opposé de la virole comporte des patins, régulièrement espacés, pour l'appui contre la face en regard du plafond ou faux plafond.

Dans une forme de réalisation préférée l'organe d'obturation est fixé sur la virole de la pièce d'habillage par aimantation.
Dans ce cadre une pluralité d'aimants sont avantageusement fixés sur des pattes solidaires de la face interne de la virole de la pièce d'habillage, lesquels aimants sont agencés pour assurer la fixation de l'organe d'obturation amovible réalisé en matériau adapté, genre acier galvanisé par exemple.

L'invention sera encore illustrée, sans être aucunement limitée, par la description suivante d'une forme de réalisation particulière, donnée uniquement à titre d'exemple et représentée sur les dessins annexés dans lesquels :
- la figure 1 est une vue en perspective du dispositif d'habillage selon l'invention ;
- la figure 2 montre le dispositif d'habillage de la figure 1, vu par-dessus ;
- la figure 3 est une vue en coupe du dispositif d'habillage, selon 3-3 de la figure 2 ;
- les figures 4 à 8 montrent le montage du dispositif d'habillage des figures 1 à 3 au niveau de l'extrémité inférieure d'un conduit d'évacuation de fumée, et la finalisation de l'installation par la mise en place d'un conduit de raccordement ;
- la figure 9 montre le montage du dispositif d'habillage des figures 1 à 3, dans le cas où l'appareil de chauffage n'est pas raccordé tout de suite au conduit d'évacuation de fumée.

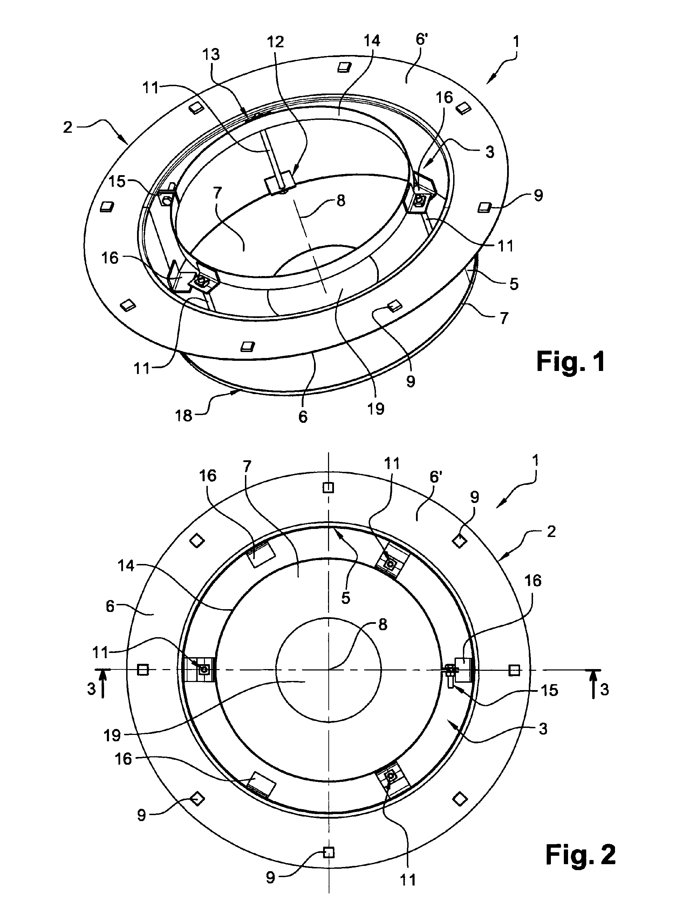

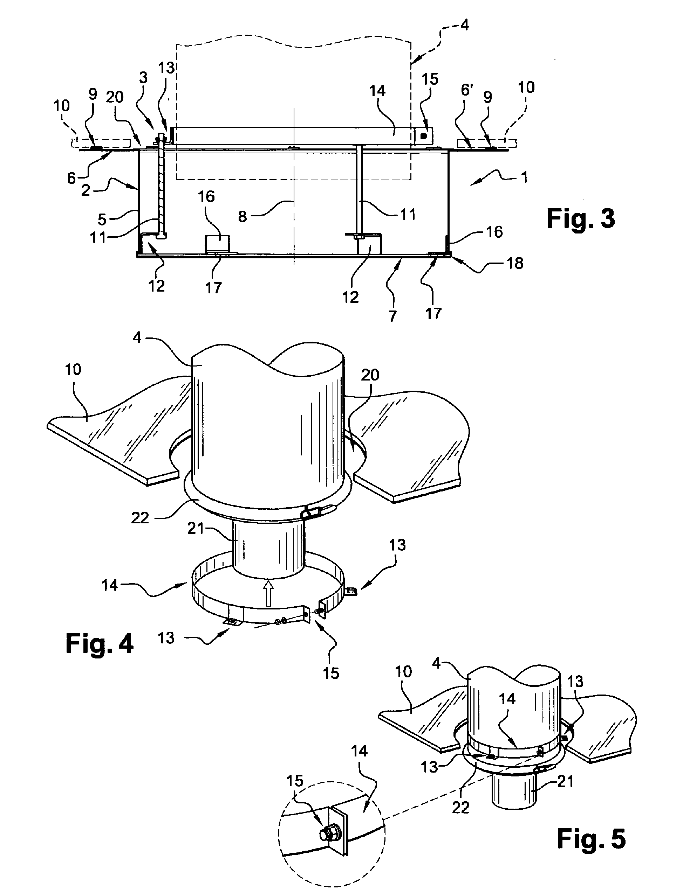

Tel qu'illustré sur les figures 1 à 3, le dispositif d'habillage 1 conforme à l'invention comprend une pièce d'habillage 2 et des moyens 3 pour fixer cette pièce d'habillage 2 sur l'extrémité inférieure d'un conduit d'évacuation de fumée 4 (illustré en pointillés sur la figure 3).

La pièce d'habillage 2 est constituée d'une virole cylindrique 5 dont l'une des extrémités (dite extrémité « supérieure ») se prolonge par une collerette 6 et dont l'autre extrémité (dite extrémité « inférieure ») est associée à un organe d'obturation amovible 7.

La virole 5, d'axe 8, peut être réalisée en tôle d'acier galvanisé ; son diamètre peut être de l'ordre de 200 à 400 mm et sa hauteur de l'ordre de 100 à 300 mm.
La collerette 6, également réalisée en acier galvanisé, est solidarisée par soudage avec l'extrémité supérieure de la virole 5 ; cette collerette 6 s'étend dans un plan perpendiculaire à l'axe 8 de la virole 5 ; son pourtour extérieur est ici circulaire, mais il peut aussi être polygonal, par exemple carré.
Le diamètre extérieur de la collerette circulaire 6 peut être de l'ordre de 300 à 500 mm.

Sur les figures 1 à 3 on remarque que la face 6' de la collerette 6, qui est orientée à l'opposé de la virole 5 (face dite « supérieure) comporte une pluralité de patins 9 régulièrement espacés, ici au nombre de huit.
Ces patins 9 constituent des organes séparateurs ou entretoises, destinés à prendre appui contre le plafond ou faux plafond 10 traversé par le conduit d'évacuation de fumée 4 à équiper, en particulier pour assurer une ventilation du volume interne du dispositif d'habillage 1, une fois monté. Les patins 9 ont une épaisseur de quelques mm ; ils peuvent être réalisés en matériau du genre polyuréthane et ils sont de préférence fixés par collage.

Les moyens 3 qui assurent la solidarisation entre la pièce d'habillage 2 et le conduit d'évacuation de fumée 4 sont constitués d'une pluralité de tiges filetées 11, ici au nombre de trois, agencées à l'intérieur de la virole 5 et qui viennent assembler, chacune, une patte 12 solidaire de la face interne de la virole 5 et une patte 13 solidaire d'un collier rapporté 14 apte à venir se fixer par serrage sur la face externe de l'extrémité inférieure dudit conduit d'évacuation de fumée 4.
Les tiges filetées 11 s'étendent à proximité de la face interne de la virole 5, parallèlement à l'axe 8. Leurs têtes coopèrent avec les pattes inférieures 12 de virole 5 et elles sont associées à des écrous qui coopèrent avec les pattes supérieures 13 du collier 14.
Les pattes 12 consistent en de petites équerres en acier galvanisé soudées au niveau de l'extrémité inférieure de la virole 5 ; elles sont ici au nombre de trois, régulièrement réparties sur le périmètre de la virole.
Les pattes 13 consistent en de petites équerres soudées sur le collier de serrage 14 ; elles sont aussi ici au nombre de trois, régulièrement réparties sur le périmètre du collier.
Sur les figures 1 à 3, on remarque le système vis/écrou 15 qui permet les manoeuvres de serrage et de desserrage du collier 14.

L'organe 7 pour l'obturation de l'ouverture inférieure de la virole 5 consiste en un plateau, ici circulaire en acier galvanisé, fixé de manière amovible par aimantation. La virole 5 comporte donc des moyens de fixation de l'organe d'obturation amovible 7. Pour cela la face interne de l'extrémité inférieure de la virole 5 comporte une pluralité de pattes 16, ici au nombre de trois, montées entre les pattes 12 précitées, et dont la face inférieure est équipée d'un aimant rapporté 17 fixé par tout moyen approprié (par exemple par aimantation. Les aimants « d'accrochage » 17 s'étendent dans le plan de la bordure circulaire inférieure de la virole 5, pour coopérer avec la face supérieure du plateau d'obturation 7, comme cela apparaît sur la figure 3.
L'organe d'obturation 7 est équipé d'un retour périphérique circulaire 18, orienté vers le haut, qui facilite son positionnement sur la virole 5 et qui assure une finition esthétique.
De la sorte l'organe d'obturation 7 est convenablement solidarisé avec la pièce d'habillage 2 ; et il peut très facilement être enlevé et repositionné à volonté.
A titre de variante, l'organe d'obturation 7 peut être agencé pour assurer sa fixation amovible sur la virole 5 par encliquetage ou par fermeture du type quart de tour.

En fonction de la présence ou non d'un conduit de raccordement dans le prolongement vers le bas du conduit d'évacuation de fumée 4, l'organe d'obturation 7 est choisi, soit muni d'un orifice central 19, comme illustré sur les figures 2 et 3 (en cas de présence d'un conduit de raccordement, pour permettre le passage de ce dernier), soit plein, c'est-à-dire dépourvu d'orifice central (en absence de conduit de raccordement).
Le diamètre de cet orifice central 19 est adapté au diamètre du conduit de raccordement.
Le choix de l'organe d'obturation utilisé est fonction de la configuration rencontrée.

Le dispositif 1 conforme à l'invention est adapté pour « habiller » l'extrémité inférieure d'un conduit d'évacuation de fumée 4 qui s'étend généralement depuis une cheminée sortant de la toiture, jusqu'à un plafond ou faux plafond et qui dépasse de quelques centimètres sous ce plafond ou faux plafond, que ce conduit d'évacuation 4 soit en attente d'être associé à un conduit de raccordement équipant un appareil de chauffage type poêle ou cuisinière, ou que ce conduit d'évacuation 4 soit effectivement associé à un tel conduit de raccordement.

Comme on peut le voir sur la figure 3, le diamètre de la virole 5 de la pièce d'habillage 2 est supérieur au diamètre du conduit d'évacuation de fumée 4 équipé. Le diamètre externe de la collerette 6 est, de son coté, supérieur au diamètre de l'orifice de passage 20.

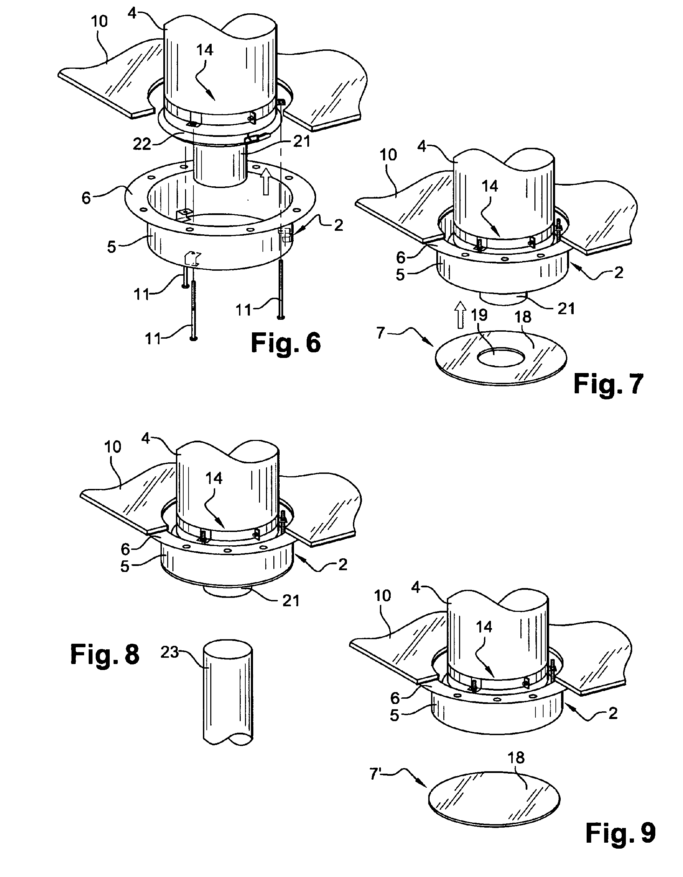

On a illustré sur les figures 4 à 8 le montage de ce dispositif d'habillage 1 au moment de l'installation de l'appareil de chauffage du type poêle ou cuisinière, avec son conduit de raccordement.
Comme on peut le voir sur les figures 4 et 5, la première opération consiste à fixer le collier de serrage 14 sur le pourtour extérieur de l'extrémité inférieure du conduit d'évacuation de fumée 4, par exemple au niveau de la face inférieure du plafond ou faux plafond 10, ou juste au dessus. Le conduit d'évacuation de fumée 4 est ici équipé d'une pièce de réduction 21 (par exemple une réduction conique), fixée par un collier de serrage 22.
Le collier 14 étant convenablement serré sur le conduit 4, la pièce d'habillage 2 peut être rapportée (figure 6) et fixée co-axialement audit conduit 4, par l'intermédiaire des tiges filetées 11 coopérant avec les couples de pattes 12,13, ceci jusqu'à ce que la face supérieure 6' de la collerette 6 vienne en appui contre la face inférieure du plafond ou faux plafond 10 (figure 7), par l'intermédiaire des patins entretoises 9.
La pièce 2 est alors suspendue au conduit 4, sous ce dernier.
La manoeuvre des tiges filetées 11 s'effectue par l'ouverture inférieure de la virole 5 et à l'intérieur de celle-ci.
L'orifice inférieur de la virole 5 est fermé par un organe d'obturation 7 (maintenu par les aimants 17), muni d'un orifice central 19 pour le passage du conduit de raccordement (figure 7).
Le montage est finalisé par la mise en place du conduit de raccordement 23 (figure 8), par exemple du type conduit émaillé, par pénétration dans le dispositif d'habillage 1 (enfilement sur la réduction 21 par passage entre celle-ci et la bordure de l'orifice 19).

Dans le cas où l'appareil de chauffage n'est pas raccordé tout de suite au conduit d'évacuation de fumée 4, le dispositif d'habillage 1 est posé en absence de la pièce de réduction 21. La pièce d'habillage 2 est fixée sur le conduit d'évacuation de fumée 4 par les tiges filetées 11 et l'ouverture inférieure de la virole 5 est fermée par un organe d'obturation plein 7' (c'est-à-dire dépourvu d'orifice central), tel qu'illustré sur la figure 9.
Ensuite, au moment de l'installation de l'appareil de chauffage, l'organe d'obturation plein 7' est déposé et l'extrémité inférieure du conduit d'évacuation de fumée 4 peut être équipée de la pièce de réduction 21 et du conduit de raccordement 23 pour obtenir l'ensemble illustré sur les figures 7 et 8.

Le dispositif d'habillage conforme à l'invention est très facile à poser, et éventuellement à enlever et reposer. Il permet une finition parfaite entre le conduit d'évacuation de fumée et le conduit de raccordement. Ce dispositif d'habillage est d'autre part autoportant et il ne fait donc supporter aucune charge au plafond ou faux plafond traversé.
Ce dispositif d'habillage permet de masquer la partie de réglage et de dilatation du conduit de raccordement, partie facilitant avantageusement le montage et la maintenance de l'appareil de chauffage.

La pièce d'habillage 2 et l'organe d'obturation 7,7' peuvent être proposés en plusieurs finitions ou coloris, par exemple noir ou blanc. Ils peuvent aussi être repeint dans la couleur souhaitée, sur le chantier.

## Revendications

1. Installation d'évacuation de fumée pour un appareil de chauffage type poêle ou cuisinière, laquelle installation comprend un conduit (4) qui s'étend depuis une cheminée sortant de la toiture jusqu'à un plafond ou faux plafond (10) et dont l'extrémité inférieure traverse un orifice de passage (20) ménagé dans ledit plafond ou faux plafond (10) et dépasse de quelques centimètres sous ce dernier, lequel conduit (4) est destiné à être associé à un conduit de raccordement équipant ledit appareil de chauffage, laquelle installation **caractérisée en ce qu'**elle comporte un dispositif d'habillage de l'extrémité inférieure dudit conduit (4) qui dépasse sous ledit plafond ou faux plafond (10) par ledit orifice de passage (20), lequel dispositif d'habillage comprend :
- une pièce d'habillage (2) constituée d'une virole (5) d'axe (8), dont l'une des extrémités se prolonge vers l'extérieur par une collerette (6) qui s'étend dans un plan perpendiculaire audit axe (8) de ladite virole (5), et dont l'autre extrémité comporte :
- une ouverture, inférieure
- un organe d'obturation (7, 7'), amovible de ladite ouverture inférieure,
- des moyens de fixation dudit organe d'obturation (7, 7'), et
- des moyens (3) pour solidariser entre eux ladite pièce d'habillage (2) et l'extrémité inférieure dudit conduit d'évacuation de fumée (4), lesquels moyens (3) assurent le support de ladite pièce d'habillage (2) par ledit conduit (4), tout en assurant l'appui de ladite collerette (6) contre la face inférieure dudit plafond ou faux plafond (10).

2. Installation selon la revendication 1, **caractérisée en ce qu'**elle comporte, soit un organe d'obturation plein (7'), lorsque le conduit d'évacuation de fumée (4) n'est pas associé à un conduit de raccordement (23), soit un organe d'obturation (7) muni d'un orifice (19) de passage d'un conduit de raccordement (23), en cas de présence d'un tel conduit de raccordement (23) relié audit conduit d'évacuation de fumée (4).

3. Installation selon l'une quelconque des revendications 1 ou 2, **caractérisée en ce que** la pièce d'habillage (2) comprend une virole (5) cylindrique associée à un organe d'obturation (7,7') dont le pourtour extérieur est circulaire.

4. Installation selon l'une quelconque des revendications 1 à 3, **caractérisée en ce que** la collerette (6) de la pièce d'habillage (2) présente un pourtour extérieur circulaire.

5. Installation selon l'une quelconque des revendications 1 à 3, **caractérisée en ce que** la collerette (6) de la pièce d'habillage (2) présente un pourtour extérieur carré.

6. Installation selon l'une quelconque des revendications 1 à 5, **caractérisée en ce que** les moyens (3) de solidarisation entre la pièce d'habillage (2) et le conduit d'évacuation de fumée (4) sont constitués d'une pluralité de tiges filetées (11) qui viennent assembler chacune deux pattes, l'une (12) solidaire de la face interne de la virole (5) et l'autre (13) solidaire de la face externe dudit conduit d'évacuation de fumée (4).

7. Installation selon la revendication 6, **caractérisée en ce que** les pattes (13) solidaires du conduit d'évacuation de fumée (4) sont fixées sur un collier de serrage rapporté (14).

8. Installation selon l'une quelconque des revendications 1 à 7, **caractérisée en ce que** la face (6') de la collerette (6) qui est orientée à l'opposé de la virole (5) comporte des patins (9), régulièrement espacés, pour l'appui contre la face en regard du plafond ou faux plafond (10).

9. Installation selon l'une quelconque des revendications 1 à 8, **caractérisée en ce qu'**elle comporte un organe d'obturation (7,7') fixé sur la virole (5) de la pièce d'habillage (2) par aimantation.

10. Installation selon la revendication 9, **caractérisée en ce qu'**elle comporte une pluralité d'aimants (17) fixés sur des pattes (16) solidaires de la face interne de la virole (5) de la pièce d'habillage (2), lesquels aimants (17) sont agencés pour assurer la fixation de l'organe d'obturation amovible (7,7') réalisé en matériau approprié, genre acier galvanisé par exemple.

## Patentansprüche

1. Rauchgasabteitungsantage für ein Heizgerät des Typs Zimmerofen oder Küchenherd, wobei die Anlage eine Leitung (4) umfasst, die sich von einem Kamin, der aus dem Dach austritt, bis zu einer Decke oder einer Zwischendecke (10) erstreckt, und dessen unteres Ende durch eine Durchgangsöffnung (20) hindurchgeht, die in der Decke einer Zwischendecke(10) vorgesehen ist und um einige Zentimeter unter dieser herausragt, wobei die Leitung (4) dazu bestimmt ist, mit einer Anschlussleitung verbunden zu werden, mit der das Heizgerät versehen ist, wobei die Anlage eine Vorrichtung zum Verkleiden des unteren Endes der Leitung (4), das unter der Decke oder Zwischendecke (10) aus der Durchgangsöffnung (20) herausragt, umfasst, wobei die Verkleidungsvorrichtung folgendes umfasst:
- ein Verkleidungstell (2), das von einem Mantel (5) mit einer Achse (8) gebildet ist, wobei sich eines seiner Enden nach außen durch einen Kragen (6) verlängert, der sich in einer Ebene senkrecht auf die Achse (8) des Mantels (5) erstreckt, und dessen anderes Ende folgendes umfasst:
* eine untere Öffnung,
* ein abnehmbares Verschlusselement (7, 7') der unteren Öffnung,
* Mittel zur Befestigung des Verschlusselements (7, 7'),
und
* Mittel (3), um das Verkleidungstell (2) und das untere Ende der Rauchgasableitung (4) miteinander zu verbinden, welche Mittel (3) die Unterstützung des Verkleidungsteils (2) durch die Leitung (4) gewährleisten, wobei sie die Abstützung des Kragens (6) an der Unterseite der Decke oder Zwischendecke (10) sicherstellen,

2. Anlage nach Anspruch 1, **dadurch gekennzeichnet, dass** sie entweder ein volles Verschlusselement (7'), wenn die Rauchgasableitung (4) nicht mit einer Anschlussleitung (23) verbunden ist, oder ein Verschlusselement (7) umfasst, das mit einer Durchgangsöffnung (19) für eine Anschlussleitung (23) versehen ist, falls eine solche Anschlussleitung (23) vorhanden ist, die mit der Rauchgasableitung (4) verbunden ist.

3. Anlage nach einem der Ansprüche 1 oder 2, **dadurch gekennzeichnet, dass** das Verkleidungstell (2) einen zylindrischen Mantel (5) umfasst, der mit einem Verschlusselement (7, 7') verbunden ist, dessen äußerer Umfang kreisförmig ist.

4. Anlage nach einem der Ansprüche 1 bis 3, **dadurch gekennzeichnet, dass** der Kragen (6) des Verkleidungsteils (2) einen kreisförmigen äußeren Umfang aufweist.

5. Anlage nach einem der Ansprüche 1 bis 3, **dadurch gekennzeichnet, dass** der Kragen (6) des Verkleidungsteils (2) einen quadratischen äußeren Umfang aufweist.

6. Anlage nach einem der Ansprüche 1 bis 5, **dadurch gekennzeichnet, dass** die Verbindungsmittel (3) zwischen dem Verkleidungsteil (2) und der Rauchgasableitung (4) von einer Vielzahl von Gewindestangen (11) gebildet sind, die jeweils zwei Schellen miteinander verbinden, die einerseits (12) mit der Innenseite des Mantels (5) und andererseits (13) mit der Außenseite der Rauchgasableitung (4) verbunden sind.

7. Anlage nach Anspruch 6, **dadurch gekennzeichnet, dass** die Schallen (13), die mit der Rauchgasabieitung (4) verbunden sind, auf einem aufgesetzten Klemmring (14) befestigt sind.

8. Anlage nach einem der Ansprüche 1 bis 7, **dadurch gekennzeichnet, dass** die Seite (6') des Kragens (6), die gegenüber dem Mantel (5) ausgerichtet ist, regelmäßig verteile Kufen (9) für die Abstützung an der Seite gegenüber der Decke oder Zwischendecke (10) umfasst.

9. Anlage nach einem der Ansprüche 1 bis 8, **dadurch gekennzeichnet, dass** sie ein Verschlusselement (7, 7') umfasst, das auf dem Mantel (5) des Verkleidungsteils (2) durch Magnetverbindung befestigt ist.

10. Anlage nach Anspruch 9, **dadurch gekennzeichnet, dass** sie eine Vielzahl von Magneten (17) umfasst, die auf Schellen (16) befestigt sind, die mit der Innenseite des Mantels (5) des Verkleidungsteils (2) verbunden sind, wobei die Magnete (17) derart angeordnet sind, dass sie die Befestigung des abnehmbaren Verschlusselements (7, 7') gewährleisten, das aus einem geeigneten Material, beispielsweise vom Typ verzinkter Stahl, hergestellt ist.

## Claims

1. A smoke exhaust installation for a heating appliance of the stove or cooker type, wherein said installation comprises a pipe (4) that extends from a chimney going out of the roof to a ceiling or false-ceiling (10) and whose lower end goes through a passage orifice (20) arranged in said ceiling or false-ceiling (10) and projects by a few centimeters under the latter, wherein said pipe (4) is intended to be associated with a connecting pipe with which said heating appliance is equipped, wherein said installation includes a device for covering the lower end of said pipe (4) that projects under said ceiling or false-ceiling (10) through said passage orifice (20), wherein said covering device comprises:
- a covering part (2) consisted of a barrel (5) of axis (8), one end of which is extended outwardly by a flange (6) that extends in a plane perpendicular to said axis (8) of said barrel (5), and whose other end includes:
- a lower opening,
- a removable member (7, 7') for sealing said lower opening,
- means for fastening said sealing member (7, 7'),
- means (3) for securing together said covering part (2) and the lower end of said smoke exhaust pipe (4), wherein said means (3) ensure the support of said covering part (2) through said pipe (4), while ensuring the bearing of said flange (6) against the lower face of said ceiling or false-ceiling (10).

2. The installation according to claim 1, **characterized in that** it includes, either a solid sealing member (7'), when the smoke exhaust pipe (4) is not associated with a connecting pipe (23), or a sealing member (7) provided with a passage orifice (19) for a connecting pine (23), in case such a connecting pipe (23) is present, connected to said smoke exhaust pipe (4).

3. The installation according to claim 1 or 2, **characterized in that** the covering part (2) comprises a cylindric barrel (5) associated with a sealing member (7, 7') whose outer periphery is circular.

4. The installation according to any one of claim 1 to 3, **characterized in that** the flange (6) of the covering part (2) has a circular outer periphery.

5. The installation according to any one of claim 1 to 3, **characterized in that** the flange (6) of the covering part (2) has a square outer periphery.

6. The installation according to any one of claim 1 to 5, **characterized in that** the means (3) for securing together the covering part (2) and the smoke exhaust pipe (4) are consisted of a plurality of screw rods (11), each of which assemble two tabs, one (12) being integral with the inner face of the barrel (5) and the other (13) being integral with the outer face of said smoke exhaust pipe (4).

7. installation according to claim 6, **characterized in that** the tabs (13) that are integral with the smoke exhaust pipe (4) are fastened to an added clamping collar (14).

8. The installation according to any one of claim 1 to 7, **characterized in that** the face (6') of the flange (6) that is on the opposite side with respect to the barrel (5) includes pads (9), regularly spaced apart, for bearing against the opposite face of the ceiling or false-ceiling (10).

9. The installation according to any one of claim 1 to 8, **characterized in that** it includes a sealing member (7, 7') fastened to the barrel (5) of the covering part (2) by magnetization.

10. The installation according to claim 9, **characterized in that** it includes a plurality of magnets (17) fastened to tabs (16) that are integral with the inner face of the barrel (5) of the covering part (2), wherein said magnets (17) are arranged in in such a manner to ensure the fastening of the removable sealing member (7, 7') made of a suitable material, such as galvanized steel for example.
